# EUROPÄISCHE PATENTSCHRIFT

(11) **EP 0 521 414 B1**
(45) Veröffentlichungstag und Bekanntmachung des Hinweises auf die Patenterteilung: **13.09.1995**
(21) Anmeldenummer: 92110873.4
(22) Anmeldetag: 26.06.1992
(51) Int. Cl.: B44B 5/02, B65C 9/18, B29C 59/04

(54) **Vorrichtung zum Übertragen eines Dekors von einer Prägefolie auf eine Materialbahn**
Device for transferring a decoration from an embossing foil to a material web
Dispositif pour transférer une décoration d'une feuille d'estampage sur une bande en matériau

(30) Priorität: 01.07.1991 DE 4121766
(43) Veröffentlichungstag der Anmeldung: 07.01.1993
(73) Patentinhaber: LEONHARD KURZ GMBH & CO., 90763 Fürth (DE)
(72) Erfinder: Mitsam, Reinwald, W-8502 Zirndorf (DE)
(74) Vertreter: LOUIS, PÖHLAU, LOHRENTZ & SEGETH

(56) Entgegenhaltungen:
- CH-A- 661 804
- DE-C- 3 210 551
- GB-A- 793 185
- US-A- 2 446 771

## Beschreibung

Die Erfindung betrifft eine Vorrichtung zum Übertragen eines Dekors von einer Prägefolie auf eine Materialbahn, mit einer Prägestation, die eine beheizte Stützeinrichtung und eine Andruckrollenanordnung aufweist, wobei die Materialbahn und die Prägefolie durch eine zwischen der Stützeinrichtung und der Andruckrollenanordnung gegebenen Prägestrecke hindurchtransportiert werden.

Eine derartige Vorrichtung ist aus der DE 32 10 551 C2 bekannt. Dort ist die beheizte Stützeinrichtung als Prägewalze ausgebildet. Die Andruckrollenanordnung dieser bekannten Vorrichtung weist Andruckrollen-Paare auf, die an die Prägewalze anlegbar sind. Durch die an die Prägewalze andrückbaren Andruckrollen-Paare ergibt sich bei einem entsprechend grossen Durchmesser der Prägewalze ein die Prägestrecke bildender Prägespalt mit einem dem Radius der Prägewalze entsprechenden Krümmungsradius und mit einer entsprechenden Kontaktlänge, was bedeutet, dass bei einer solchen bekannten Vorrichtung die Kontaktzeit zwischen Materialbahn und Prägefolie im Prägespalt, die zur Kontaktlänge direkt und zur Geschwindigkeit der Prägewalze, d.h. zur Prägegeschwindigkeit, umgekehrt proportional ist, relativ gross sein kann, bzw. dass bei einer bestimmten vorgegebenen Kontaktzeit entsprechend der grossen Kontaktlänge die Prägegeschwindigkeit gross sein kann. Diese bekannte Vorrichtung bedingt jedoch durch die Andruckrollenanordnung mit den Andruckrollen-Paaren einen bestimmten Herstellungs- und Steuerungsaufwand. Durch die Stützeinrichtung in Form einer Prägewalze relativ grossen Durchmessers ergibt sich desweiteren eine bestimmte Masseträgheit der Stützeinrichtung und folglich der Vorrichtung zum Übertragen eines Dekors von einer Prägefolie auf eine Materialbahn. Das bedingt eine entsprechend dimensionierte Antriebseinrichtung. Diese bekannte Vorrichtung ist ausserdem nur für flexible, an die Mantelfläche der Prägewalze anschmiegbare Materialbahnen geeignet.

Aus der DE-PS 943 379 ist eine Vorrichtung zum Prägen und Beschneiden der Ränder von thermoplastischen Kunststoffbahnen oder von Bahnen aus Papier, Faserstoff oder Geweben, die mit diesen Kunststoffen imprägniert oder beschichtet sind, bekannt, wobei die Kunststoffbahn auf einer Unterlage, z.B. einer Walze, aufliegt. Auch bei dieser bekannten Vorrichtung ist die Stützeinrichtung durch eine Führungs- bzw. Prägewalze geeigneten Durchmessers gebildet. Die Andruckrollenanordnung weist dort eine Andruckrolle bzw. ein Prägerad mit einem im Vergleich zum Durchmesser der Prägewalze kleinen Durchmesser auf, so dass die Kontaktlänge des Prägespaltes zwischen Stützeinrichtung und Andruckrollenanordnung klein ist. Nachdem -wie bereits erwähnt worden ist- die Kontaktzeit zwischen Prägefolie und zu beprägender Materialbahn zur Kontaktlänge des Kontaktspaltes direkt und zur Prägegeschwindigkeit umgekehrt proportional ist, sind bei dieser bekannten Vorrichtung infolge der kleinen Kontaktlänge nur geringe Prägegeschwindigkeiten realisierbar, um eine bestimmte Kontaktzeit einzuhalten.

Die DE 34 40 131 C2 offenbart ein Verfahren und eine Vorrichtung zum Bedrucken eines Substrates durch Heissprägen, wobei das Substrat und eine mit einem Dekor versehene Prägefolie mit dem Dekor der zu bedruckenden Oberfläche des Substrates gegenüberliegend, gemeinsam durch eine Prägestation geführt werden, in der das Substrat und die Prägefolie unter Wärmeeinwirkung zwischen einem Druckstock o.dgl. und einem Gegendruckelement unter Übertragung des Dekors auf das Substrat zusammengepresst werden. Dort wird mindestens die Prägefolie vor dem Erreichen der Prägestation vorgeheizt und in der Prägestation mit ihrer dekorfreien Oberfläche in Kontakt mit dem Gegendruckelement gebracht, das seinerseits beheizt ist, während das Substrat in der Prägestation von seiner Rückfläche her von dem unbeheizten Druckstock beaufschlagt wird. Mit diesem Verfahren bzw. mit dieser Vorrichtung ist es möglich, das Substrat mit variablen Daten preisgünstig und automatisch zu bedrucken. Hier erfolgt der Transport des Substrates und der Transport der Prägefolie im Gegensatz zur Vorrichtung der eingangs genannten Art nicht kontinuierlich sondern schrittweise, d.h. der Transport des Substrates und die Vorschubbewegung der Prägefolie werden während des eigentlichen Druckvorgangs unterbrochen.

Aus der US-PS 38 63 562 ist eine Vorrichtung zur kontinuierlichen Verbindung einer textilen Gewebelage mit einem thermoplastischen Polymermaterial bekannt. Diese Vorrichtung weist zwei endlose Transportbänder auf, die entlang eines gemeinsamen Längenabschnittes voneinander beabstandet und zueinander parallel geführt sind, um einen Spalt auszubilden, entlang welchem Heizeinrichtungen angeordnet sind, um die textile Gewebelage und die Schicht aus thermoplastischem Polymermaterial vorzuheizen, bevor diese beiden Lagen zwischen einer das eine Förderband umlenkenden Walze und einer dieser gegenüberliegenden federnden Kissenvorrichtung miteinander verbunden werden. Der tatsächliche Verbindungsbereich ist auch bei dieser bekannten Vorrichtung nur durch den relativ kleinen Bogenabschnitt der besagten Umlenkwalze definiert, was bedeutet, dass infolge der kleinen Kontaktlänge die Transportgeschwindigkeit ebenfalls nur sehr klein sein darf, wenn die Kontaktzeit zwischen textiler Gewebelage und der Lage aus thermoplastischem Polymermaterial einen bestimmten Wert nicht unterschreiten darf, um eine zuverlässige Verbindung zwischen der textilen Gewebelage und dem thermoplastischen Polymermaterial zu gewährleisten.

Die DE-AS 1 164 643 betrifft eine Vorrichtung zum Übertragen eines Reliefmusters von einer Prägewalze auf eine Warenbahn, d.h. eine Vorrichtung zur Oberflächenstrukturierung der besagten Warenbahn, und nicht eine Vorrichtung zum Übertragen eines Dekors von einer Prägefolie auf eine Materialbahn. Dort ist die Prägewalze mit einem entsprechenden Oberflächenrelief ausgebildet. Eine andere Möglichkeit besteht dort darin, nicht die Prägewalze sondern ein um die Prägewalze umlaufendes endloses Prägeband mit einer entsprechenden Oberfläche passenden Reliefs auszubilden. Mit einer Vorrichtung zum Übertragen eines Dekors von einer Prägefolie auf eine zu beprägende Materialbahn hat diese bekannte Vorrichtung also - wie bereits ausgeführt worden ist - keine Gemeinsamkeiten. Die Prägestrecke zur Ausbildung des Oberflächenreliefs auf der Materialbahn ist bei dieser bekannten Vorrichtung durch eine Stützwalze und durch eine an der Ablaufstelle vorgesehene Leitwalze festgelegt. Bei dieser bekannten Vorrichtung ist folglich die Prägestrecke bzw. die Kontaktlänge der Prägestrecke nicht durch den Achsabstand zwischen den voneinander entfernten Stützwalzen definiert.

Aus der DE 35 45 744 A1 ist eine Doppelbandpresse zum Herstellen eines Oberflächenreliefs auf einem Gegenstand bekannt. Um die beiden endlosen Prägebänder dieser bekannten Doppelbandpresse an das mit einem Relief zu versehende Werkstück mit einer ausreichenden Kraft anzupressen, sind dort die beiden Prägebänder entsprechend biege- und verwindungssteif.

Eine Doppelbandpresse der zuletzt genannten Art ist auch aus der DE-OS 25 53 802 bekannt, die zum Aufpressen eines zu kaschierenden Materials auf eine Trägerplatte vorgesehen ist.

Der Erfindung liegt die Aufgabe zugrunde, eine Vorrichtung der eingangs genannten Art zu schaffen, die mit einer relativ grossen Prägegeschwindigkeit betreibbar und die insbes. auch für nur bedingt flexible oder nicht flexible Materialbahnen geeignet ist.

Diese Aufgabe wird erfindungsgemäss durch eine Vorrichtung gemäß Anspruch 1 gelöst.

Die zueinander zumindest annähernd achsparallelen Stützwalzen können einen relativ kleinen Durchmesser aufweisen, so dass die Massenträgheit der beweglichen Teile der Vorrichtung relativ gering ist, was sich nicht nur auf die Antriebseinrichtung für die beheizbare Stützeinrichtung vorteilhaft auswirkt, sondern auch auf die Baugrösse der Vorrichtung. Der ganz entscheidende Vorteil der erfindungsgemässen Vorrichtung besteht darin, dass sie sich bei Ausbildung einer Prägestrecke vergleichsweise grosser Kontaktlänge auch zum Beprägen von nur bedingt flexiblen bzw. unflexiblen Materialbahnen eignet. Die Vorrichtung kann hierbei mit einer grossen Prägegeschwindigkeit betrieben werden, ohne dass hierdurch die Kontaktzeit zwischen Prägefolie und zu beprägender Materialbahn in der Prägestrecke unter vorgegebene Werte absinkt.

Wenn oben ausgeführt worden ist, dass jeder Stützwalze mindestens eine Andruckrolle der Andruckrollenanordnung zugeordnet ist, so heisst das, dass es selbstverständlich auch möglich ist, jeder Stützwalze bspw. ein Andruckrollen-Paar zuzuordnen. Sind nur zwei Stützwalzen vorgesehen, so ergibt sich zwischen diesen eine geradlinig verlaufende Prägestrecke. Sind mehr als zwei Stützwalzen vorhanden, so kann die Prägestrecke ebenfalls geradlinig verlaufen. Bei der zuletzt genannten Ausbildung ist es jedoch auch möglich, die Stützwalzen derartig anzuordnen, dass sich zum Spannen des Stützkörperbandes eine etwas abgewinkelte Prägestrecke ergibt.

Als zweckmässig hat es sich erwiesen, wenn die Stützeinrichtung mindestens eine Umlenkwalze aufweist, die auf der von der Prägestrecke abgewandten Seite der Stützwalzen von diesen beabstandet und zu diesen zumindest annähernd achsparallel vorgesehen ist, so dass das Stützkörperband mit freien Bandabschnitten zwischen den beiden oder den beiden äussersten Stützwalzen und der mindestens einen Umlenkwalze und mit einem die Prägestrecke definierenden Bandabschnitt zwischen den beiden bzw.den beiden äusseren Stützwalzen verläuft. Die mindestens eine Umlenkwalze kann denselben Durchmesser aufweisen wie die beiden Stützwalzen. Die Umlenkwalze ist vorzugsweise mittig zwischen den Stützwalzen vorgesehen, um die Vorrichtung symmetrisch auszubilden bzw. um das Stützkörperband gleichförmig um die Stützwalzen und die mindestens eine Umlenkwalze umlaufen zu lassen.

Mindestens eine der Stützwalzen und/oder die mindestens eine Umlenkwalze kann mit einer den Antrieb des Stützkörperbandes bildenden Antriebseinrichtung verbunden sein. Bei dieser Antriebseinrichtung kann es sich um einen Drehstrom- oder Gleichstrommotor handeln.

Um das aus einem Silikonmaterial mit einer mechanischen Verstärkung bestehende Stützkörperband, das entsprechend temperaturbeständig und mechanisch belastbar ist, geeignet beheizen zu können, kann an mindestens einem der freien Bandabschnitte des Stützkörperbandes zwischen Stütz- und Umlenkwalze eine Heizeinrichtung für das Stützkörperband vorgesehen sein. Diese Heizeinrichtung weist vorzugsweise eine Infrarot-Strahlenquelle auf.

Als zweckmässig hat es sich erwiesen, wenn die Stützwalzen und die mindestens eine Umlenkwalze voneinander derart beabstandet sind, dass die freien Bandabschnitte des Stützkörperbandes zwischen Stütz- und Umlenkwalze länger sind als der die Kontaktlänge der Prägestrecke definierende Bandabschnitt des Stützkörperbandes zwischen den Stützwalzen. Auf diese Weise ist es problemlos möglich, die erwähnte mindestens eine Heizeinrichtung für das Stützkörperband an der Vorrichtung vorzusehen. Durch eine solchermaßen ausgebildete Vorrichtung ist es des weiteren möglich, durch Erwärmung bedingte Längenänderungen des Stützkörperbandes auszugleichen, was vorzugsweise mittels der mindestens einen Umlenkwalze erfolgt.

Die Stützwalzen sind vorzugsweise gleich gross und weisen voneinander vorzugsweise einen Abstand auf, der etwas grösser ist als der Durchmesser jeder Stützwalze. Bspw. kann der Achsabstand zwischen den Stützwalzen zwischen dem 1,2- und 2-fachen des Durchmessers jeder Stützwalze betragen.

Die erfindungsgemäße Vorrichtung eignet sich - wie bereits weiter oben erwähnt worden ist - in vorteilhafter Weise zum Beprägen formstabiler oder in ihrer Form stabilisierter Gegenstände. Hierbei kann es sich zum Beispiel um ebene Kunststoffteile, Blenden, Abdeckungen und andere Formteile handeln.

Ein Ausführungsbeispiel der erfindungsgemässen Vorrichtung zum Übertragen eines Dekors von einer Prägefolie auf eine Materialbahn ist in der Zeichnung schematisch dargestellt und wird nachfolgend beschrieben. Es zeigt:
- Fig. 1: eine Vorderansicht der schematisch verdeutlichten Vorrichtung, und
- Fig. 2: einen Teilschnitt in Richtung der Schnittlinie II-II in Fig. 1 durch die Umlenkwalze und das Stützkörperband in einem grösseren Maßstab.

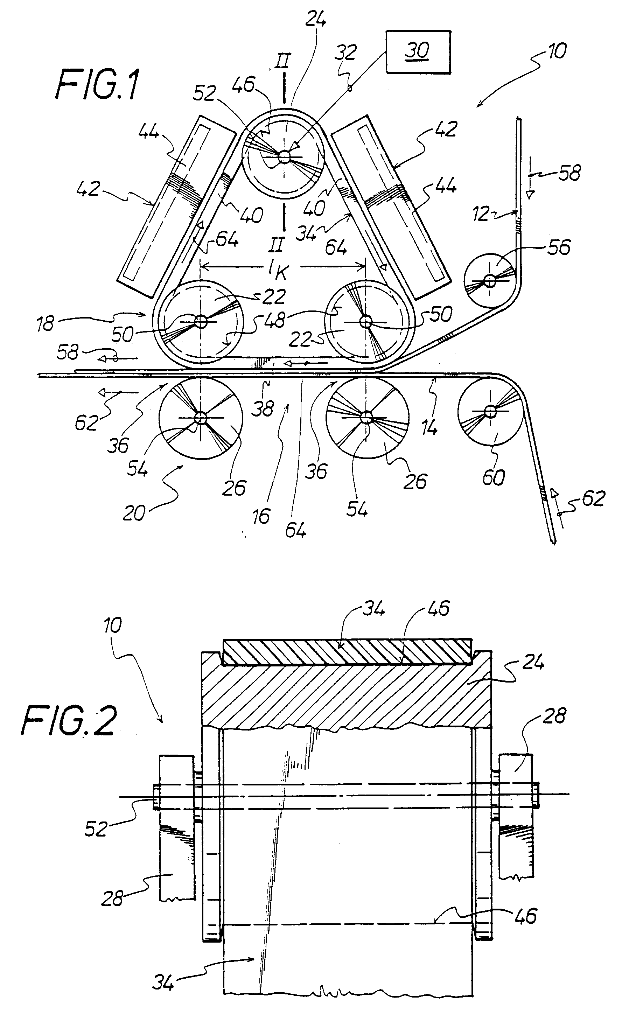

Fig. 1 zeigt schematisch eine Vorrichtung 10 zum Übertragen eines Dekors von einer Prägefolie 12 auf eine Materialbahn 14. Die Vorrichtung 10 weist eine Prägestation 16 mit einer beheizten Stützeinrichtung 18 und einer Andruckrollenanordnung 20 auf. Die Stützeinrichtung 18 ist mit zwei Stützwalzen 22 und einer Umlenkwalze 24 ausgebildet, die voneinander beabstandet und zueinander achsparallel ausgerichtet sind. Die Umlenkwalze 24 ist von den Stützwalzen 22 beabstandet und zwischen diesen mittig vorgesehen.

Den beiden Stützwalzen 22 sind Andruckrollen 26 der Andruckrollenanordnung 20 zugeordnet. Die Stützwalzen 22, die Umlenkwalze 24 und die Andruckrollen 26 können gleiche Durchmesser besitzen. Sie sind an einem in Fig. 2 abschnittweise angedeuteten Gestell 28 drehbar gelagert. An diesem Gestell ist auch eine Antriebseinrichtung 30 befestigt, die in Fig. 1 als Block schematisch angedeutet ist. In Fig. 1 ist eine Ausbildung der Vorrichtung 10 angedeutet, bei welcher die Antriebseinrichtung 30 zum Antrieb der Umlenkwalze 24 vorgesehen ist, was durch den Pfeil 32 angedeutet ist.

Um die beiden voneinander beabstandeten und zueinander achsparallel ausgerichteten Stützwalzen 22 und die zu den Stützwalzen 22 achsparallel vorgesehene Umlenkwalze 24 läuft ein endloses Stützkörperband 34 um, durch das zwischen der Stützeinrichtung 18 und der Andruckrollenanordnung 20 eine Prägestrecke 36 festgelegt wird, durch welchen die in Fig. 1 abschnittweise gezeichnete Prägefolie 12 gemeinsam mit der in dieser Figur abschnittweise gezeichneten, zu beprägenden Materialbahn 14 hindurchtransportiert wird, um an der Prägestation 16 das Dekor der Prägefolie 12 von dieser auf die Materialbahn 14 zu übertragen.

Durch die beiden voneinander beabstandeten und zueinander achsparallelen Stützwalzen 22 und dem zwischen den beiden Stützwalzen 22 gegebenen Abschnitt 38 des Stützkörperbandes 34 ist die Kontaktlänge l_{K} der Prägestrecke 36 der Prägestation 16 definiert. Wie ohne weiteres ersichtlich ist, ergibt sich erfindungsgemäss eine Vorrichtung 10 mit einer relativ grossen Kontaktlänge l_{K}, so dass es möglich ist, die Vorrichtung 10 mit vergleichsweise grosser Prägegeschwindigkeit zu betreiben und dennoch eine ausreichend lange Kontaktzeit zwischen Prägefolie 12 und Materialbahn 14 in der Prägestation 16 der Vorrichtung 10 zu gewährleisten. Die Kontaktlänge l_{K} kann durch entsprechende Wahl des Abstandes zwischen den beiden Stützwalzen 22 bzw. bei einer Vorrichtung 10 mit mehr als zwei Stützwalzen 22 durch Wahl des Abstandes zwischen den beiden äussersten Stützwalzen 22 eingestellt bzw. im Bedarfsfall verlängert werden.

Mit der Bezugsziffer 40 sind die beiden freien Bandabschnitte des Stützkörperbandes 34 zwischen der Umlenkwalze 24 und den Stützwalzen 22 bezeichnet. In der Nachbarschaft jedes der beiden freien Bandabschnitte 40 des Stützkörperbandes 34 ist eine Heizeinrichtung 42 mit einer Infrarot-Strahlenquelle 44 angeordnet, d.h. am Gestell 28 (sh. Fig. 2) befestigt.

Fig. 2 zeigt in einer Vorderansicht teilweise entlang der Schnittlinie II-II aufgeschnitten die Umlenkwalze 24 bzw. abschnittweise das Stützkörperband 34, das um die Umlenkwalze 24 umläuft. Zur Geradlauf-Führung des Stützkörperbandes 34 ist die Umlenkwalze 24 mit einer spulenförmig ausgesparten Mantelfläche 46 (sh. auch Fig. 1) ausgebildet. Entsprechend sind die beiden Stützwalzen 22 jeweils mit einer spulenförmig ausgesparten Mantelfläche 48 ausgebildet.

Die Stützwalzen 22 sind mit zugehörigen Lagerachsen 50 am Gestell 28 drehbar gelagert bzw. mittels (nicht gezeichneter) Spanneinrichtungen gegeneinander verstellbar. Entsprechend ist die Umlenkwalze 24 mit einer Lagerachse 52 und sind die Andruckrollen 26 mit zugehörigen Lagerachsen 54 am Gestell 28 drehbar gelagert.

Die Prägefolie 12 wird von einer (nicht gezeichneten) Vorratsrolle abgewickelt und um eine Umlenkrolle 56 umgelenkt der Prägestation 16 zugeführt. Die Vorschubrichtung der Prägefolie 12 ist durch den Pfeil 58 angedeutet. Die Materialbahn 14 wird von einer (nicht gezeichneten) Vorratsrolle abgewickelt und um eine Umlenkrolle 60 umgelenkt der Prägestation 16 zugeführt. Die Transportrichtung der Materialbahn 14 ist durch den Pfeil 62 angedeutet. Die Transportgeschwindigkeit der Prägefolie 12 entspricht der Transportgeschwindigkeit der Materialbahn 14 , d.h. der Prägegeschwindigkeit der Vorrichtung 10. Mit derselben Geschwindigkeit werden die Stützwalzen 22, die Umlenkwalze 24 und die Andruckrollen 26 angetrieben bzw. um ihre zugehörigen Lagerachsen gedreht, so dass sich das Stützkörperband 34 mit derselben Prägegeschwindigkeit bewegt wie die Materialbahn 14 und die Prägefolie 12. Die Bewegungsrichtung des Stützkörperbandes 34 ist durch die Pfeile 64 angedeutet.

Wenn oben stets von einer zu beprägenden Materialbahn 14 die Rede ist, so soll darunter beispielsweise auch eine Anordnung einzelner zu beprägender Gegenstände verstanden werden, welche der Prägestrecke 36 mittels einer geeigneten Transporteinrichtung zugeführt werden.

## Patentansprüche

1. Vorrichtung zum Übertragen eines Dekors von einer Prägefolie (12) auf eine Materialbahn (14), mit einer Prägestation (16), die eine beheizte Stützeinrichtung (18) und eine Andruckrollenanordnung (20) aufweist, wobei die Materialbahn (14) und die Prägefolie (12) durch eine zwischen der Stützeinrichtung (18) und der Andruckrollenanordnung (20) gegebenen Prägestrecke (36) durchtransportiert werden, wobei
die Stützeinrichtung (18) mindestens zwei voneinander beabstandete und zueinander zumindest annähernd achsparallele Stützwalzen (22) aufweist, um welche ein mittels eines Antriebs angetriebenes beheiztes endloses Stützkörperband (34) aus einem Silikonmaterial mit einer mechanischen Verstärkung umläuft, wobei die Prägestrecke (36) eine Kontaktlänge (l_{K}) aufweist, die durch den Achsabstand zwischen den beiden voneinander am weitesten entfernten Stützwalzen (22) definiert ist, und dass jeder der beiden oder zumindest den beiden voneinander am weitesten entfernten Stützwalzen (22) mindestens eine Andruckrolle (26) der Andruckrollenanordnung (20) zugeordnet ist.

2. Vorrichtung nach Anspruch 1,
**dadurch gekennzeichnet,**
dass die Stützeinrichtung (18) mindestens eine Umlenkwalze (24) aufweist, die auf der vom Prägespalt (36) abgewandten Seite der mindestens zwei Stützwalzen (22) von diesen beabstandet und zu diesen zumindest annähernd achsparallel vorgesehen ist, so dass das Stützkörperband (34) mit freien Bandabschnitten (40) zwischen den beiden oder den beiden äussersten Stützwalzen (22) und der mindestens einen Umlenkwalze (24) und mit einem die Prägestrecke (36) festlegenden Bandabschnitt (38) zwischen den Stützwalzen (22) verläuft.

3. Vorrichtung nach Anspruch 2,
**dadurch gekennzeichnet,**
dass mindestens eine der Stützwalzen (22) und/oder die mindestens eine Umlenkwalze (24) mit einer den Antrieb des Stützkörperbandes (34) bildenden Antriebseinrichtung (30) verbunden ist.

4. Vorrichtung nach Anspruch 2,
**dadurch gekennzeichnet,**
dass an mindestens einem der freien Bandabschnitte (40) des Stützkörperbandes (34) eine Heizeinrichtung (42) für das Stützkörperband (34) vorgesehen ist.

5. Vorrichtung nach einem der Ansprüche 2 bis 4,
**dadurch gekennzeichnet,**
dass die Stützwalzen (22) und die mindestens eine Umlenkwalze (24) voneinander derart beabstandet sind, dass die freien Bandabschnitte (40) des Stützkörperbandes (23) länger sind als der die Kontaktlänge (l_{K}) der Prägestrecke (36) definierende Bandabschnitt (38) zwischen den Stützwalzen (22).

6. Vorrichtung nach einem der vorhergehenden Ansprüche,
**dadurch gekennzeichnet,**
dass die Stützwalzen (22) gleich gross sind und voneinander einen Abstand aufweisen, der etwas grösser ist als der Durchmesser jeder Stützwalze (22).

7. Verwendung der Vorrichtung nach einem der vorhergehenden Ansprüche zum Beprägen einzelner formstabiler oder in ihrer Form stabilisierter Gegenstände.

## Claims

1. A device for transferring a design from an embossing foil (12) to a material web (14), with an embossing station (16) which has a heated support device (18) and a pressing roller assembly (20), in which arrangement the material web (14) and the embossing foil (12) are conveyed through an embossing path (36) provided between the support device (18) and the pressing roller assembly (20), in which arrangement the support device (18) has at least two supporting rollers (22) interspaced from each other and being at least approximately axially parallel to each other, round which there circulates a heated endless support-body belt (34) made of a silicone material with a mechanical reinforcement and driven by means of a drive, in which arrangement the embossing path (36) has a contact length (l_{K}) which is defined by the axial distance between the two supporting rollers (22) which are furthest from each other, and to each of the two, or at least to the two supporting rollers (22) which are furthest from each other, there is assigned at least one pressing roller (26) of the pressing roller assembly (20).

2. A device according to claim 1,
**characterized in that**
the support device (18) has at least one guide roller (24) which is provided on the side remote from the embossing gap (36) of at least two supporting rollers (22) at a distance therefrom and being at least approximately axially parallel thereto, so that the support-body belt (34) runs with free belt sections (40) between the two or the two outermost supporting rollers (22), between the supporting rollers (22) and at least one guide roller (24), and with a belt section (38) defining the embossing path (36) between the supporting rollers (22).

3. A device according to claim 2,
**characterized in that**
at least one of the supporting rollers (22) and/or at least one guide roller (24) is connected to a drive device (30) forming the drive for the support-body belt (34).

4. A device according to claim 2,
**characterized in that**
provision is made for a heating appliance (42) for the support-body belt (34) near at least one of the free belt sections (40) of the support-body belt (34).

5. A device according to one of claims 2 to 4,
**characterized in that**
the supporting rollers (22) and at least one guide roller (24) are interspaced from each other in such a way that the free belt sections (40) of the support-body belt (23) are longer than the belt section (38) between the supporting rollers (22) which defines the contact length (l_{K}) of the embossing path (36).

6. A device according to one of the preceding claims,
**characterized in that**
the supporting rollers (22) are of equal size and are interspaced from each other at a distance which is slightly larger than the diameter of each supporting roller (22).

7. Use of the device according to one of the preceding claims for embossing individual articles of a stable shape, or which have been stabilized in their shape.

## Revendications

1. Dispositif pour transférer une décoration d'une feuille d'estampage (12) sur un matériau en forme de bande (14) comprenant une station d'estampage (16) qui présente un mécanisme d'appui (18) chauffé et un ensemble de rouleaux de pression (20), dans lequel le matériau en forme de bande (14) et la feuille d'estampage (12) sont transportés à travers un parcours d'estampage (36) donné entre le mécanisme d'appui (18) et l'ensemble de rouleaux de pression (20), dans lequel le mécanisme d'appui (18) comporte au moins deux rouleaux d'appui (22) écartés l'un de l'autre et aux axes sensiblement parallèles, autour desquels tourne une bande d'appui (34) chauffée, faite en matière silicone avec un renforcement mécanique, dans lequel le parcours d'estampage (36) présente une longueur de contact (lₖ) qui est définie par la distance entre les axes des deux rouleaux d'appui (22) les plus éloignés l'un de l'autre et dans lequel au moins un rouleau de pression (26) de l'ensemble de rouleaux de pression (20) va de paire avec chacun des deux rouleaux d'appui (22) ou au moins avec chacun des deux rouleaux d'appui (22) les plus éloignés l'un de l'autre.

2. Dispositif selon la revendication 1, caractérisé en ce que le mécanisme d'appui (18) présente au moins un rouleau de renvoi (24), qui est placé à distance de la fente d'estampage desdits au moins deux rouleaux d'appui (22) et dont l'axe est sensiblement parallèle à ceux des rouleaux d'appui (22), de sorte que la bande d'appui (34) progresse avec les segments (40) de bande libres entre les deux rouleaux d'appui (22) ou les deux rouleaux d'appui (22) extrêmes et ledit au moins un rouleau de renvoi (24) et avec un segment (38) de bande délimitant le parcours d'estampage (36) entre les rouleaux d'appui (22).

3. Dispositif selon la revendication 2, caractérisé en ce qu'au moins un des rouleaux d'appui (22) et/ou ledit au moins un rouleau de renvoi (24) est relié à un mécanisme d'entraînement (30) formant l'entraînement de la bande d'appui (34).

4. Dispositif selon la revendication 2, caractérisé en ce qu'un dispositif de chauffage (42) pour la bande d'appui (34) est prévu sur au moins un des segments (40) de bande libres de la bande d'appui (34).

5. Dispositif selon les revendications 2 à 4, caractérisé en ce que les rouleaux d'appui (22) et ledit au moins un rouleau de renvoi (24) sont placés à distance les uns des autres de manière telle que les segments (40) de bande libres de la bande d'appui (23) sont plus longs que le segment (38) de bande définissant la longueur de contact (lₖ) du parcours d'estampage (36) entre les rouleaux d'appui (22).

6. Dispositif selon l'une des revendications précédentes, caractérisé en ce que les rouleaux d'appui (22) sont de grandeur égale et présente un écart les uns par rapport aux autres, qui est un peu plus grand que le diamètre de chaque rouleau d'appui (22)

7. Utilisation du dispositif selon l'une des revendications précédentes pour estamper des objets distincts indéformables ou de forme stabilisée.
